# EUROPEAN PATENT APPLICATION

(11) **EP 0 628 249 A2**
(43) Date of publication of application: **14.12.1994**
(21) Application number: 94830210.4
(22) Date of filing: 04.05.1994
(51) Int. Cl.: A21B 3/00, A21B 1/00

(54) **Modular self-supporting multi-function panels for industrial continuous-cycle ovens or the like**

(30) Priority: 05.05.1993 IT VR930016 U
(71) Applicant: G.P.A. ORLANDI S.p.A., I-37047 San Bonifacio (Verona) (IT)
(72) Inventor: Pimazzoni, Marco, I-37134 Verona (IT); Degli Esposti, Gabriele, I-40131 Bologna (IT)
(74) Representative: Sarpi, Maurizio

(57) **Abstract**

The present patent refers to a new constructive methodology for carrying out continuous-cycle ovens or the like. According to this new methodology, few modular multi-function elements (1) are to be realized and developed, such elements being easily constructed and mounted, and there is no more the necessity of realizing more assemblies and elements performing a single function to be produced separately and assembled together in various subsequent phases.

In general, the said modular multi-function elements (1) consist of panels (2) which are carried out in an only constructive piece comprising a supporting structure (5), a thermal insulation (4) and a part (3) of the baking oven chamber.

The supporting structure (5) consists of a plate which is arranged on the outer side of the panel and is realized with a composite material which has to be sufficiently resistant in order to tolerate the junction stress between the panels; the thermal insulation (4) consists of a layer of a suitable insulating material such as mineral wool while the inner face (3) consists of a material which is suited to the high operative temperatures of the oven and is fit for supporting the elements of the heat generating system.

## Description

The present patent refers to modular self-supporting multi-function panels which are to be used for carrying out industrial ovens, and preferably continuous-cycle ovens, or the like.

According to the present art, the "oven products" such as bread in its different shapes, biscuits, crackers, cakes, brioches and snacks are baked in plants which comprise in general the following functional assemblies:
a) a supporting structure or frame which supports and keeps all the plant assemblies in position, such supporting structure or frame being formed by beams or plates which are connected by means of suitable joint systems such as screws, rivets and/or soldering seams;
b) a baking chamber, heated by a heat generating system, the product to be baked being fed in with a moving system;
c) a direct or indirect heat generating system for baking the product;
d) a continuous moving system for the product and its eventual container;
e) auxiliary systems for the vapour extraction, the air circulation in the baking chamber, the vaporisation and further ones;
f) nonconductive materials for preventing the dispersion of the heat necessary for the baking process from both the heat generating system and the baking chamber;
g) covers or cases for safety, protection or aesthetic purposes.

The laying of such functional assemblies is done by mounting the supporting structure or frame, joining the beams or plates forming the supporting framework in which the baking chamber, the heat generating assembly and the moving system for moving the product and its eventual container are then inserted or laid and then fixed.

Subsequently, the auxiliary systems are inserted, the insulation of the assembled parts is accomplished and finally, the outer cases are applied.

The laying of the oven may be done either by sending all the various disassembled parts to the client and assembling them on the spot or by carrying out a modular construction in the workshop, such modular construction consisting of oven sections which can be sent to the client. The assembling procedure is then accomplished on the spot.

However, the above solutions involve some disadvantages owing to the presence of an excessive number of designs, components, raw materials, manufacturing and mounting phases which increase the final cost of the product remarkably since there are several partial costs to be summed up in the above methodology of design and construction. Moreover, the so-obtained construction is uselessly heavy which causes also an increase of the costs for moving and transporting the constructive work.

An object of the present invention consists in removing, or at least reducing remarkably, the above mentioned inconveniences which are due to the complexity of production and construction of the known oven plants and in particular, taking advantage of a new constructive methodology according to which few modular multi-function elements are to be realized and developed, such elements being easily constructed and mounted, and therebeingno more the necessity of realizing more assemblies and elements performing a single function to be produced separately and assembled together in various subsequent phases.

Within the said general object, a particular aim of the present invention consists in reducing considerably the number of the elements necessary for the realization of an oven section. Moreover, also the phases for carrying out the modular multi-function elements have been reduced and facilitated in order to make the production operations in the workshop, the shipment and the final assembling easier. All the above-described particular objects and functions have been reached by the present invention which provides modular self-supporting multi-function panels for carrying out industrial ovens, and preferably continuous-cycle ovens, or the like, each of such panels being characterized for consisting of an inner face which is made of a material suited to the high operative temperatures of the oven and to support the elements of the heat generating system, a layer for the thermal insulation which consists of a stratum of suitable insulating material, and an outer plate which is made of a rigid material, resisting to stresses, and acts as a support for all the things that are contained, hanged and leaned in the baking system, the outer part of which acts as a case; the said panels are shaped in any manner and dimension but, preferably, such panels are dimensioned so as to permit a modular construction of the oven.

Further features and details of the present invention will be better understood from the following description of a preferred embodiment, given as an example not limiting the invention, as well as from the accompanying drawings wherein:-
Figure 1 shows a schematic view in transversal section of an oven module as carried out with the panels according to the invention in its whole;
Figure 2 shows a schematic view in section of a multi-function panel;
Figure 3 shows a schematic side view of a series of consecutive modules which are put on supporting elements;
Figure 4 shows a schematic view of a possible variant of Fig. 3 in which the supporting elements are integral with the panels.

With reference to the accompanying drawings, a module 1 is obtained by mounting self-supporting multi-function panels according to the invention in its whole. More consecutive modules form industrial tunnel type ovens or, more generally, industrial continuous cycle ovens or the like.

In general, the module 1 consists of more panels 2.

Each panel shows an inner face 3, a n insulating layer 4 and an outer plate 5.

The inner face 3 is made of stainless steel or other material suitable for the high operative temperatures of the oven and for supporting the elements of the heat generating system, such elements being placed within the baking chamber. The insulating layer 4 is a stratum of a suitable insulating material such as mineral wool.

The outer plate 5 supports all the things that are contained, hanged and leaned in the baking chamber. Moreover, the outer plate 5 acts as a case and is made of a composite material which is sufficiently resisting to the joint stresses between the panels. For instance, this material may consist of overlapped layers made of steel, expanded material and aluminium respectively.

The so-obtained multi-function panels may be carried out in whatever shapes and dimensions. However, such panels are preferably dimensioned so as to permit a modular construction of the oven in order to make the handling and transport easier.

There are two possibilities as concerns the assembling of the oven:
- to assemble the complete modules in the workshop of the constructor and then, to send them to the client; or
- to send the various multi-function panels to the client and then, to completely assemble the oven in the place of destination.

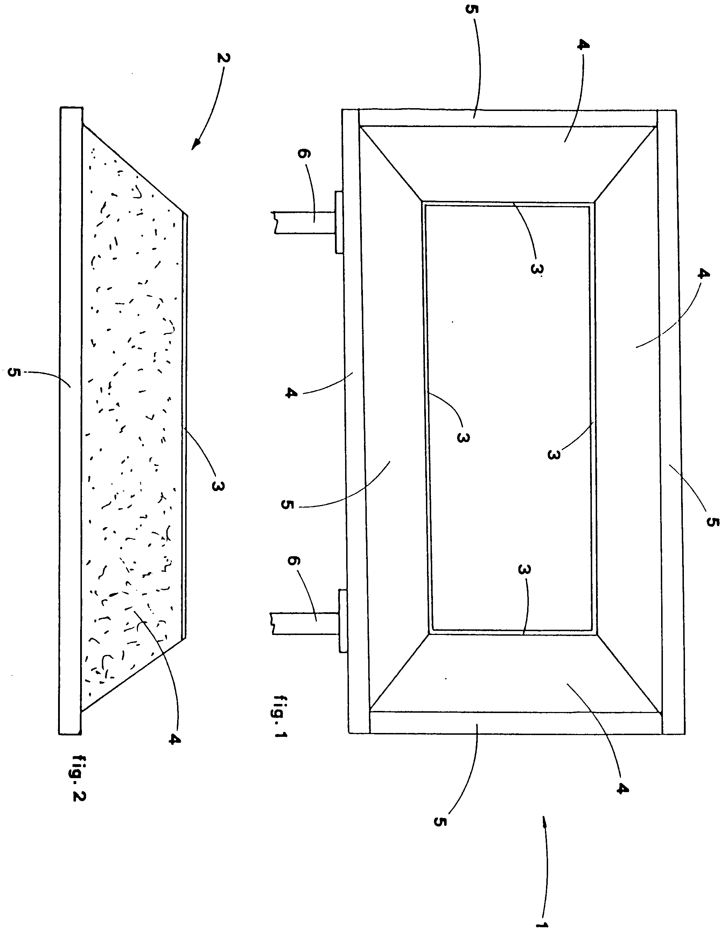

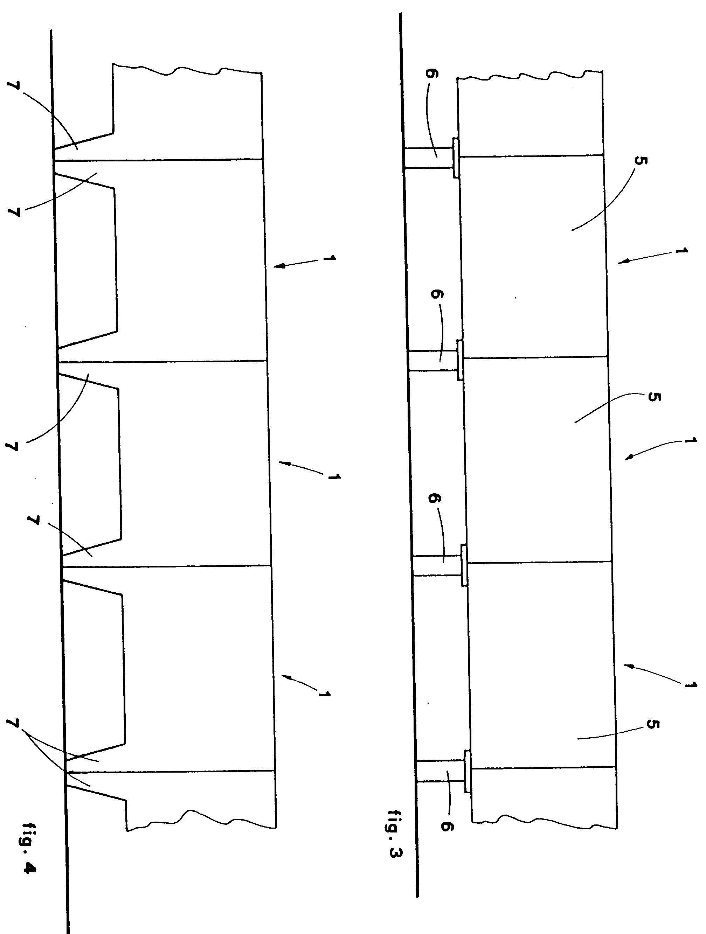

The modules may be put and fixed on supporting elements 6 (see Fig. 3). Otherwise, the panels may be provided with brackets 7 for laying the oven on the floor (Fig. 4) in order to obtain a perfect levelling of the various consecutive modules.

The panels have been realized bearing in mind the following essential factors:
- the plate 5, namely the outer component that supports the panel, must guarantee a proper resistance and stiffness, suitable for the use. Moreover, the plate 5 must not weigh too much so as to facilitate the transport;
- the junctions between the inner faces 3 must be carried out with suitable sealing characteristics for sealing the baking vapours;
- finally, the assembling of the various elements forming the multi-function panels must be fit for the services such elements have to render in order to assure the mutual cohesion of components showing different characteristics.

The multi-function panel according to the present invention has been obtained by using the technology for the construction of composite materials and structures the advantages of which are the high specific resistance, the lightness and the possibility of carrying out structures having a locally differentiated resistance and rigidity.

Advantageously, in the described modular structure there is the possibility of inserting and securing a conventional baking chamber, in the specific case the inner face 3 being omitted in each panel 2.

The panel according to the present invention has been described and illustrated according to the preferred solution. However, there may be variants comprising mechanical elements or technical parts, equivalent to the described ones, which are to be considered included in the range of protection of the present invention.

## Claims

**1)** Modular self-supporting multi-function panels for carrying out industrial ovens, and preferably industrial continuous-cycle ovens, and the like, characterized for being produced in an only constructive piece comprising a supporting structure, a thermal insulation and a part of the baking chamber of the oven.

**2)** Multi-function panels as claimed in Claim 1, characterized by the fact that the said supporting structure consists of an outer plate (5) which is made of a preferably composite, rigid material, resisting to stresses, which plate supports all the things that are contained, hanged and leaned in the baking system.

**3)** Multi-function panels as claimed in the foregoing claims, characterized by the fact that the said thermal insulation consists of an insulating layer (4), made of a suited insulating material such as mineral wool or the like.

**4)** Multi-function panels as claimed in the foregoing claims, characterized by the fact that the said part of the baking chamber of the oven consists of an inner face (3), made of a material suitable for the high operative temperatures of the oven and for supporting the elements of the heat generating system.

**5)** Multi-function panels as claimed in the foregoing claims, characterized for being shaped in any form and dimension but preferably in a dimension permitting a mudular construction of the oven.

**6)** Multi-function panels as claimed in the foregoing claims, characterized by the fact that the modules, which are obtained by joining the panels one with another, may be layed on supporting elements (6) and fixed; otherwise, the panels may be provided with brackets (7) for laying the oven on the floor in order to obtain a perfect levelling of the various consecutive modules.

**7)** Multi-function panels as claimed in the foregoing claims, characterized by the fact that according to a possible variant of the said modular structure, the inner faces (3) are removed from each panel so that a conventional baking chamber may be then inserted in the modular structure itself and secured.
